## Europäisches Patentamt
## European Patent Office
## Office européen des brevets

(11) Veröffentlichungsnummer: **0 034 794**
**A1**

(12) **EUROPÄISCHE PATENTANMELDUNG**

(21) Anmeldenummer: **81101125.3**

(22) Anmeldetag: **17.02.81**

(51) Int. Cl.³: **B 01 D 59/00**
**G 03 F 7/00**

(30) Priorität: **21.02.80 DE 3006527**

(43) Veröffentlichungstag der Anmeldung:
**02.09.81 Patentblatt 81/35**

(84) Benannte Vertragsstaaten:
**DE NL**

(71) Anmelder: **SIEMENS AKTIENGESELLSCHAFT Berlin
und München**
**Postfach 22 02 61**
**D-8000 München 22(DE)**

(72) Erfinder: **Tischer, Peter, Dr.rer.nat.Phys.**
**Roemerstrasse 16**
**D-8021 Strasslach(DE)**

(54) **Verfahren zum Herstellen von Trenndüsen für die Isotopentrennung in einer Isotopenanreicherungsanlage.**

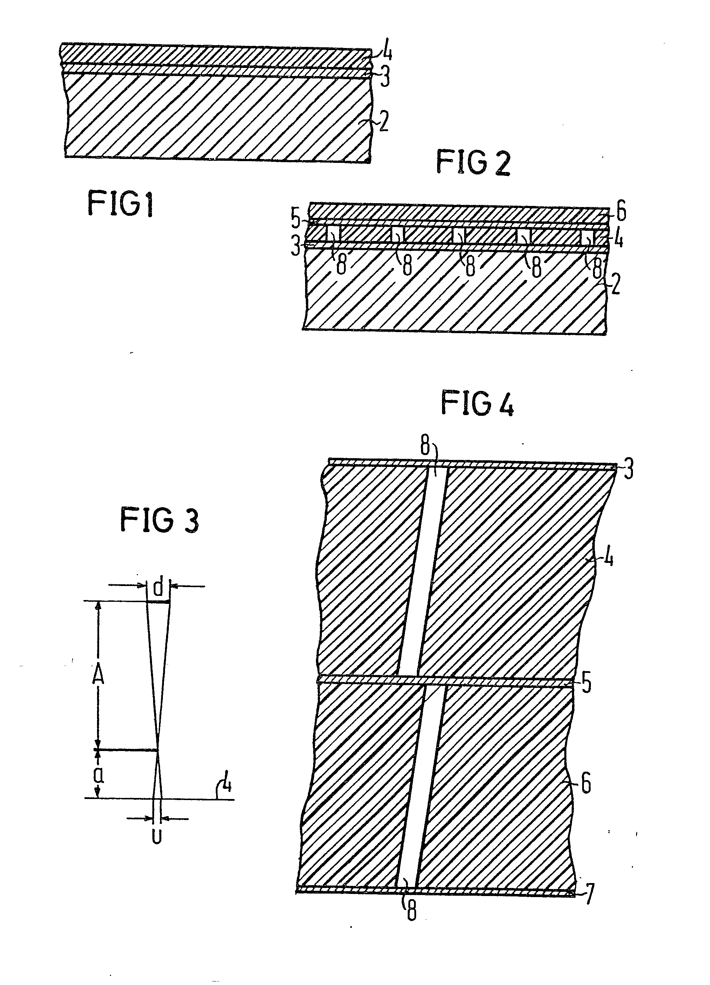

(57) Die Erfindung bezieht sich auf ein Verfahren zum Herstellen von Trenndüsen für die Isotopentrennung in einer Isotopen-Anreicherungsanlage. Dabei wird das Düsenmuster durch Röntgenlithografie dadurch erzeugt, daß auf einer Unterlage (2) aus Kunststoff abwechselnd übereinander eine, gegen den Entwickler der Fotolackschicht resistente dünne Zwischenschicht (3, 5, 7) und eine Fotolackschicht (4, 6...), die entsprechend dem Muster belichtet und entwickelt wird, aufgebracht und durch Wärme miteinander verbunden werden. Diese Schichtenfolge wird solange festgesetzt, bis die gewünschte Schichtdicke des Düsenkanals erreicht ist. Abschließend werden die Zwischenschichten (3, 5, 7) in den Gaszuführungs- und Gasabfuhrkanälen (9,10) entfernt (Figuren 1 bis 3).

FIG 2

COMPLETE DOCUMENT

Croydon Printing Company Ltd.

SIEMENS AKTIENGESELLSCHAFT  
Berlin und München

Unser Zeichen  
VPA  
80 P 7 0 1 1 E

Verfahren zum Herstellen von Trenndüsen für die Isotopentrennung in einer Isotopenanreicherungsanlage.

Die vorliegende Patentanmeldung betrifft ein Verfahren
zum Herstellen von Trenndüsen für die Isotopentrennung
in einer Isotopenanreicherungsanlage, bei dem das Düsenmuster mittels Lithografieverfahren in einer Lackschicht
erzeugt wird.

Für die Isotopentrennung wurde das sogenannte Trenndüsenverfahren entwickelt, bei dem in einer laminaren Gasströmung an einer Kurve die unterschiedliche Zentrifugalkraft dazu führt, daß Gase mit verschiedenen Isotopen an
einer Schneide getrennt werden. Um dieses Verfahren zu
verbessern, ist man bestrebt, einerseits die Abmessungen
der verwendeten Strömungskanäle zu verkleinern, andererseits die Schichtdicke der in einem Verfahrensschritt hergestellten Metallfolie, die diese Strömungskanäle enthält, zu vergrößern, um nicht zu viele Folien übereinander stapeln zu müssen, bis ein einsatzfähiger Trennkanal
entsteht.

Zur Erzeugung derartiger Trenndüsen werden Lithografieverfahren verwendet. Ein solches Verfahren ist beispielsweise aus der deutschen Patentschrift 2 009 265 bekannt.
Diese Verfahren können aber die gestellten Forderungen
bezüglich Verkleinerungen der Strukturen bei gleichzeitiger Erhöhung der Schichtdicke nicht erfüllen, weil eine
lichtoptische Strukturübertragung bei den geforderten geringen Abmessungen nicht die erforderliche Schärfentiefe
von etwa 100 $\mu$m besitzt.

Wenn man die Lithografie mit Röntgenstrahlung durchführt

Edt 1 Plr/14.2.1980

und anschließend die Metallmuster durch Mikrogalvanoplastik aufbaut, erhält man zwar verkleinerte Strukturen,
doch ergeben sich dabei folgende Schwierigkeiten bzw.
Nachteile:

Es müssen nach wie vor Folien, die das Muster beinhalten,
sehr maßgetreu übereinander gestapelt werden. Beim
Pressen der gestapelten Folien treten jedoch Justierfehler auf. An die Qualität der Oberflächen der einzelnen
Folien werden hohe Anforderungen gestellt, da rauhe Oberflächen zu Undichtigkeiten führen und damit den Wirkungsgrad der Düsen herabsetzen.

Aufgabe der Erfindung ist es daher, ein Verfahren zur
Herstellung von Trenndüsen der eingangs genannten Art
anzugeben, bei dem die geschilderten Nachteile nicht auftreten, bei dem vor allen Dingen Justierfehler und Undichtigkeiten im Trennkanal vollkommen ausgeschlossen
sind.

Diese Aufgabe wird erfindungsgemäß dadurch gelöst, daß
eine für Röntgenstrahlen empfindliche Fotolackschicht
aufgebracht und durch Erhitzen mit der Unterlage unter
Zwischenschaltung einer gegen den Entwickler für die
Fotolackschicht resistenten Schicht fest verbunden wird,
daß dann die Fotolackschicht durch eine entsprechende
Maske mit Röntgenstrahlung belichtet und entwickelt wird,
daß nach der Entwicklung des Düsenmusters in der Fotolackschicht darauf in der gleichen Reihenfolge weitere,
gegen den Entwickler für den Fotolack resistente Schichten
und weitere Fotolackschichten aufgebracht, erhitzt, entsprechend belichtet und entwickelt werden bis die gewünschte Schichtdicke der Trenndüsen erreicht ist und
daß abschließend in den Gaszu- und Abfuhrkanälen die gegen den Entwickler für die Fotolackschichten resistenten
Schichten in den Zwischenlagen entfernt werden. Dabei
wird das Düsenmuster nicht durch galvanischen Aufbau von
Metall in einer Fotolackschicht erzeugt, sondern das im Fotolack erzeugte Muster selbst als das Trenndüsenmuster verwendet. Außerdem wird nicht das Muster in einer Folie erzeugt und die einzelnen Folien dann gestapelt, sondern das Muster wird in jeder auf der vorhergehenden Schicht neu aufgebrachten Fotolackschicht erzeugt, so daß undichte, den Wirkungsgrad herabsetzende Stellen in der Anordnung von vornherein ausgeschlossen werden. Die Zwischenschichten verhindern, daß der Entwickler die darunterliegende Schicht anlöst.

Es liegt im Rahmen der Erfindung, wegen der Gleichheit der Ausdehnungskoeffizienten bei Temperatureinwirkung, als Kunststoffunterlage eine Plexiglasplatte zu verwenden und als Fotolack eine Polymethylmetacrylatschicht (= PMMA-Schicht) aufzubringen. Als Zwischenschicht wird entweder eine Metall- oder Kunststoffschicht, vorzugsweise in Form einer 1 /um dicken Folie aufgedrückt und auf 170°C erhitzt. Dabei haben sich Polyimidfolien als besonders gut geeignet erwiesen.

Als Metallschichten eignen sich Kupfer- oder Nickelfolien, welche vorzugsweise durch Erhitzen mittels Stromdurchfluß mit der Unterlage bzw. der darüber liegenden Fotolackschicht verbunden werden.

An den Stellen, an denen das Gas einem solchen Düsenstock zu bzw. von ihm abgeführt wird, wird die aus Kunststoff bestehende Zwischenschicht auf mechanischem Wege, beispielsweise durch Stanzen, entfernt. Die entsprechenden aus Metall bestehenden Zwischenschichten können auch durch maskiertes Ätzen mittels einer Metallmaske durch ein Ionenätzverfahren entfernt werden.

Zur Belichtung kann sowohl Synchrotron-Röntgenstrahlung als auch Strahlung einer konventionellen Röntgenquelle verwendet werden.

Weitere Einzelheiten sind den in der Zeichnung befindlichen Figuren 1 bis 5, welche anhand eines Ausführungsbeispiels beschrieben werden, zu entnehmen. Dabei zeigen

die Figuren 1 und 2 eine nach dem erfindungsgemäßen Verfahren hergestellte Mehrlagenstruktur;

die Figuren 3 und 4 dienen der Erklärung von Problemen für das Düsenmuster, die bei der Verwendung einer konventionellen Röntgenquelle für die Bestrahlung auftreten;

die Figur 5 ein Schnittbild durch ein fertiges Düsenmuster.

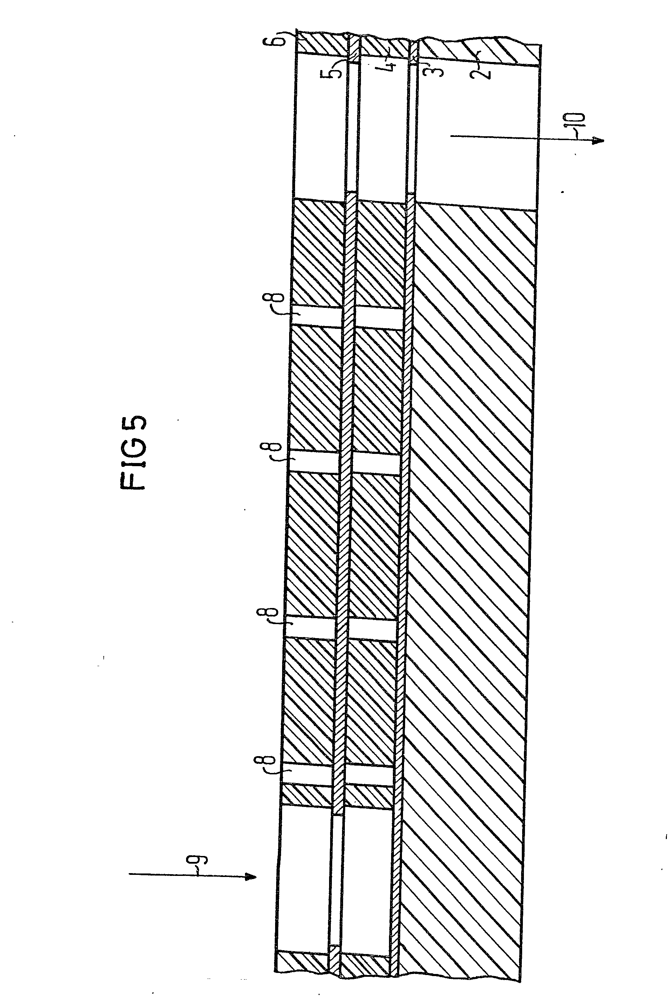

Die Herstellung der Mehrlagenstruktur erfolgt, wie in Figur 1 dargestellt ist, in folgender Weise: Auf einer Plexiglas-Unterlage 2, die größer ist als die verwendete Fläche für die herzustellenden Trenndüsen, wird eine dünne, ca. 0,5 $\mu$m dicke Metallfolie 3 aus Nickel oder Kupfer oder eine Kunststoffolie (z. B. Polyimid) aufgebracht. Darauf wird eine 100 $\mu$m dicke PMMA-Folie 4 aufgelegt und durch einen Preßstempel, der durch eine Polyimidfolie geschützt ist, auf die Unterlage (2, 3) aufgedrückt. Um die Metallfolie bzw. die Kunststoffolie 3 einerseits mit der Plexiglas-Unterlage 2, andererseits mit der aufgelegten PMMA-Folie 4 zu verbinden, wird die gesamte Anordnung (2, 3, 4) kurzzeitig auf etwa 170$^{o}$C erwärmt. Dies kann in einem Ofen oder bei Verwendung der Metallfolie durch Stromfluß durch die Metallfolie 3 geschehen, wobei die Metallfolie 3 außerhalb des noch einzubringenden Musters kontaktiert wird (in der Figur nicht dargestellt). Die PMMA-Folie 4 wird nun durch eine dem Muster entsprechende Maske mit Röntgenstrahlung belichtet und anschließend entwickelt, wobei die belichteten Teile herausgelöst werden und in der PMMA-Folie 4 das Trenndüsen-Muster (siehe Figur 2) entsteht. Die Metallschicht bzw. die Kunststofffolie 3 verhindert, daß der Entwickler die darunterliegende Schicht anlöst, welche im ersten Verfahrensschritt die Plexiglas-Unterlage 2 ist, in den späteren Folgen die weiteren PMMA-Schichten 4, 6 ... sind.

Auf dieser Anordnung (2, 3, 4) wird, wie aus Figur 2 ersichtlich ist, eine weitere Zwischenschicht 5 aufgebracht, welche sowohl in Form einer Metallfolie als auch einer Polyimidfolie von 0,5 /um Dicke aufgelegt werden kann, welche dann wieder mit einer 100 /um dicken PMMA-Folie 6 bedeckt und anschließend durch Wärmeeinwirkung verbunden wird. Dann erfolgt die Belichtung und Entwicklung der Schicht 6, wie bei der PMMA-Schicht 4 beschrieben. Diese Prozesse des wechselseitigen Beschichtens mit der Polyimid- bzw. Metallfolie 2, 5 ... und den PMMA-Folien 4, 6 ... mit anschließender Belichtung und Entwicklung werden so oft wiederholt, bis die gewünschte Dicke des Trennkanals erreicht ist. Abschließend wird durch Auflegen einer Metallmaske die übrige Fläche abgedeckt, wobei nur die Löcher  für die Gaszufuhr und -abfuhr offenbleiben, und die dünne Metallfolie (3, 5) in allen Zwischenlagen an diesen Löchern weggeätzt. Werden als Zwischenlagen (3, 5) Polyimidfolien verwendet, so werden diese an den entsprechenden Löchern durch Ausstanzen entfernt.

Die für die Belichtung verwendete Strahlung kann dabei Synchroton-Strahlung oder auch Strahlung aus einer konventionellen Röntgenquelle sein. Bei Verwendung einer konventionellen Röntgenquelle treten zwei Probleme für das Muster auf:

1. Die Quelle ist nicht punktförmig, sondern hat eine Ausdehnung von z. B. 2 mm. Dadurch entsteht bei der Schattenabbildung eine bestimmte Verschmierung der Kante, die gegeben ist durch

$$u = \frac{a}{A} \cdot d \quad \text{(siehe Figur 3)}$$

Eine weitere Verschmierung tritt von Ober- bis Unterkante der PMMA-Schicht auf, da diese 100 $\mu$m dick ist.

Bei 10 $\mu$m kleinster Struktur ist u = 1 $\mu$m zulässig. Bei einem Quellendurchmesser von d = 2 mm ist ein Abstand

$$A = \frac{150 \; \mu m \cdot 2 \; mm}{1 \; \mu m} = 300 \; mm$$

erforderlich.

In Figur 3 ist mit u die Verschmierung der Kante, mit d der Quellendurchmesser, mit a der Abstand: Kante eines Musters in der Maske zur Fotolack-Oberfläche, mit A der Abstand Quelle zur Maske bezeichnet.

2. Da die Röntgenlithografie mit konventioneller Quelle eine Zentralprojektion ist, tritt je nach Abstand der Struktur von der Mittelachse eine Verschiebung der Kante auf. Dies führt bei 100 $\mu$m dicken Fotolackschichten (4, 6 ...) dazu, daß ein Kanal 8 am Rande schräg im Muster steht. Bei den obengenannten Werten führt dies zu den in Figur 4 maßstäblich gezeichneten Verhältnissen. Die Trennwirkung der Düse wird praktisch nicht beeinflußt.

In Figur 5 sind die gleichen Bezugszeichen verwendet wie in Figur 1 bzw. 2 und 4. An der mit dem Pfeil 9 gekennzeichneten Stelle erfolgt die Gaszufuhr, an der mit dem Pfeil 10 bezeichneten Stelle verläßt das Gas die Anordnung. An diesen Stellen beträgt die kleinste Breite etwa 500 $\mu$m.

14 Patentansprüche

Patentansprüche.

1. Verfahren zum Herstellen von Trenndüsen für die Isotopentrennung in einer Isotopenanreicherungsanlage, bei dem das Düsenmuster mittels Lithografieverfahren in einer Lackschicht erzeugt wird, d a d u r c h   g e - k e n n z e i c h n e t ,   daß eine für Röntgenstrahlen empfindliche Fotolackschicht aufgebracht und durch Erhitzen mit der Unterlage unter Zwischenschaltung einer gegen den Entwickler für die Fotolackschicht resistenten Schicht fest verbunden wird, daß dann die Fotolackschicht durch eine entsprechende Maske mit Röntgenstrahlung belichtet und entwickelt wird, daß nach der Entwicklung des Düsenmusters in der Fotolackschicht darauf in der gleichen Reihenfolge weitere, gegen den Entwickler für den Fotolack resistente Schichten und weitere Fotolackschichten aufgebracht, erhitzt, entsprechend belichtet und entwickelt werden bis die gewünschte Schichtdicke der Trenndüsen erreicht ist und daß abschließend in den Gaszu- und -abfuhrkanälen die gegen den Entwickler für die Fotolackschichten resistenten Schichten in den Zwischenlagen entfernt werden.

2. Verfahren nach Anspruch 1, d a d u r c h   g e - k e n n z e i c h n e t ,   daß als Kunststoffunterlage eine Plexiglasplatte und als Fotolackschichten Polymethylmetacrylat (= PMMA-Lack) verwendet werden.

3. Verfahren nach Anspruch 1 und/oder 2, d a d u r c h   g e k e n n z e i c h n e t ,   daß als Zwischenschicht zwischen den Fotolackschichten Metall- und/oder Kunststoffschichten verwendet werden.

4. Verfahren nach einem der Ansprüche 1 bis 3, d a - d u r c h   g e k e n n z e i c h n e t ,   daß die Zwischenschichten in Form von Folien aufgedrückt werden.

5. Verfahren nach einem der Ansprüche 1 bis 4, d a - d u r c h   g e k e n n z e i c h n e t , daß Folien mit einer Schichtdicke von 1 /um verwendet werden.

6. Verfahren nach einem der Ansprüche 1 bis 5, d a - d u r c h   g e k e n n z e i c h n e t , daß Polyimid- folien und/oder Kupfer- oder Nickelfolien verwendet werden.

7. Verfahren nach einem der Ansprüche 1 bis 6, d a - d u r c h   g e k e n n z e i c h n e t , daß die aus Kunststoff bestehenden Zwischenschichten auf mechanischem Wege, beispielsweise durch Stanzen entfernt werden.

8. Verfahren nach einem der Ansprüche 1 bis 6, d a - d u r c h   g e k e n n z e i c h n e t , daß die aus Metall bestehenden Zwischenschichten durch maskiertes Ätzen mittels einer Metallmaske entfernt werden.

9. Verfahren nach Anspruch 8, d a d u r c h   g e - k e n n z e i c h n e t , daß die Zwischenschichten durch Ionenätzen entfernt werden.

10. Verfahren nach einem der Ansprüche 1 bis 9, d a - d u r c h   g e k e n n z e i c h n e t , daß das Er- hitzen der auf der Anordnung befindlichen Zwischenschicht mit der darüber befindlichen Fotolackschicht bei 170° C vorgenommen wird.

11. Verfahren nach Anspruch 10, d a d u r c h   g e - k e n n z e i c h n e t , daß das Erhitzen in einem Ofen erfolgt.

12. Verfahren nach Anspruch 10, d a d u r c h   g e - k e n n z e i c h n e t , daß das Erhitzen bei Verwendung einer Metallschicht als Zwischenschicht durch Stromfluß erfolgt.

13. Verfahren nach einem der Ansprüche 1 bis 12, d a - d u r c h  g e k e n n z e i c h n e t ,  daß als Röntgenstrahlung Synchroton-Strahlung verwendet wird.

14. Verfahren nach einem der Ansprüche 1 bis 12, d a - d u r c h  g e k e n n z e i c h n e t ,  daß die Schichtdicke der aus Polymethylmetacrylat bestehenden Fotolackschichten auf jeweils 100 /um eingestellt wird.

1/2

FIG1

FIG 2

FIG 3

FIG 4

FIG 5

# 0034794

**Europäisches Patentamt**

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | EP - A2 -O OO2 795 (IBM) <br> + Fig. 1A-1E; Ansprüche + <br> -- | 1 |
| | EP - A1 - Ó OO2 199 (IBM) <br> + Ansprüche 1,2; Fig. 2 + <br> -- | 4,5,6 |
| P,A | DE - B1 - 2 922 642 (KERNFOR-SCHUNGSZENTRUM) (23-10-1980) <br> + Fig. 1-6; Spalte 2, Zeilen 56-66 + <br> & EP-A1-O O2O 986 (O7-O1-1981) <br> -- | |
| | DE - B1 - 2 801 923 (KERNFOR-SCHUNGSZENTRUM) <br> + Fig. 1-7; Anspruch 10; Spalte 6 + <br> -- | 1 |
| | DE - A1 - 2 725 126 (WESTERN ELECTRIC) <br> + Fig. 1-3; Ansprüche + <br> -- | 1,3,6 |
| | DE - A1 - 2 602 825 (IBM) <br> + Ansprüche + <br> -- | 1,2 |
| A | DE - A - 2 333 902 (MASSACHUSETTS INST.) <br> + Fig. 1-17; Ansprüche 1-15; Seite 13 + <br> ---- | 1,2,3, 8 |

### KLASSIFIKATION DER ANMELDUNG (Int. Cl.³)

B 01 D 59/00
G 03 F  7/OO

### RECHERCHIERTE SACHGEBIETE (Int. Cl.³)

G 03 F  7/OO
G 03 B 41/OO
B O1 D 59/OO
H O5 K  3/OO

### KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patent-familie, übereinstimmendes Dokument

| X | Der vorliegende Recherchenbericht wurde für alle Patentansprüche erstellt. |
|---|---|

| Recherchenort | Abschlußdatum der Recherche | Prüfer |
|---|---|---|
| WIEN | 26-O5-1981 | KRAL |

EPA form 1503.1  06.78